# EUROPEAN PATENT SPECIFICATION

(11) **EP 2 068 041 B1**
(45) Date of publication and mention of the grant of the patent: **11.04.2012**
(21) Application number: 07023523.9
(22) Date of filing: 05.12.2007
(51) Int. Cl.: F16H 57/02, F16H 3/00

(54) **Gearbox for a motor vehicle**
Getriebe für ein Kraftfahrzeug
Boîte de vitesse pour un véhicule à moteur

(43) Date of publication of application: 10.06.2009
(73) Proprietor: GM Global Technology Operations LLC, Detroit, MI 48265-3000 (US)
(72) Inventor: Remmler, Mathias, 67294 Mauchenheim (DE); Rockenbach, Markus, 55444 Schweppenhausen (DE); Geiberger, Axel, 55116 Mainz (DE); Mohlin, Mikael, 442 33 Kungälv (SE)
(74) Representative: Strauss, Peter

(56) References cited:
- EP-A2- 1 845 289
- WO-A-03/038304
- WO-A1-2005/123437
- DE-A1- 19 923 185
- FR-A- 2 880 094

## Description

The present invention relates to a gearbox for a motor vehicle comprising coaxially arranged solid and hollow input shafts, each of which carries a plurality of drive gearwheels, each of which gearwheels meshes with at least one associated driven gearwheel on one of two layshafts. Gearboxes of this type are known from various documents, e.g. from DE 199 23 185 A1.

Gearboxes having coaxial input shafts have been the subject of intensive development efforts in recent times, due to the expectation that in combination with a double clutch for driving the two input shafts they will allow to combine advantages of conventional automatic transmissions, such as easy handling and interruption-free shifting, and of conventional manual transmissions such as fast shifting and high power efficiency.

A problem of conventional gearboxes having double input shafts is that the double clutch required for the operation occupies considerable space, so that a gearbox of this type is difficult to integrate in an engine compartment of a compact motor vehicle.

The shortage of space can be relieved somewhat by using a so called wet clutch system, in which clutch plates are cooled by a liquid coolant. Since in such a system the clutch plates are cooled much more efficiently than in a "dry" clutch system without liquid coolant, more power can be dissipated per unit of clutch plate surface, so that a wet clutch system can be designed much more compactly than a dry clutch system rated for the same maximum torque.

A gearbox for a motor vehicle according to the preamble of claim 1 is disclosed in EP 1 845 289 A2.

The object of the present invention is to provide a gearbox for a motor vehicle which can be associated to a double clutch system and can be designed very compactly. Although the need to have a compact gearbox is much more pronounced in case of a dry clutch system, the invention is applicable with dry and wet clutch systems alike.

The object of the invention is achieved by a gearbox for a motor vehicle as defined in claim 1.

By placing the gearwheels of the lowermost gears close to the bearings, bending stress at the shafts caused by torque transmission is kept low when one of these two lowermost gears is selected. The diameter of the concerned shaft/shafts may therefore be rather small, whereby space, weight and, indirectly, driving power is saved.

In at least one of the two gear sets associated to the two lowermost gears the driven gearwheel is said shaft-end gearwheel. Usually, in a low gear the driven gearwheel has a larger diameter than the drive gearwheel, so that a given force occurring between the two gearwheels at their meshing point will cause higher torque with respect to the bearing of the layshaft than with respect to the bearing of the input shaft. Therefore, the importance of being placed closely adjacent to the shaft bearing is higher for the driven gearwheel than for the drive gearwheel.

By placing the driven gearwheels of the gear sets associated to the three uppermost gears on a same layshaft with no other gearwheel in between, and by placing one of the driven gearwheels associated to said three uppermost at the end of a shaft, a diameter of the gearbox casing can be made small in the vicinity of an end of the layshaft which carries these driven gearwheels, so that the casing can be made compact.

A reverse gear is provided by means of a transfer shaft carrying two gearwheels, one of which meshes with a gearwheel on one of the input shafts, and the other one of which meshes with a gearwheel on one of the layshafts. Since the amount of the transmission ratio of the reverse gear should be rather low, similar to that of the first gear but opposite in sign, the gearwheel on said one layshaft should be rather large. Since a driven gearwheel associated to the first gear is large, too, the casing of the gearbox is be made compact by placing these two large gearwheels on the same layshaft.

In a preferred embodiment, in at least one of the two gear sets associated to the two lowermost gears both gearwheels are shaft-end gearwheels.

Preferably, the driven gearwheel of the gear set associated to the highest gear, usually being the smallest of the driven gearwheels, is said shaft-end gearwheel.

It is further preferred that the drive gearwheel of the gear set associated to the highest gear is located on one of said input shafts between a bearing of the latter and a drive gearwheel associated to one of the two lowermost gears. In this way, a second type of gearbox having one gear less can be designed easily by not providing the gear set associated to said highest gear, whereby the shafts can be shortened, the width of a casing can be reduced, and said drive gearwheel associated to one of the two lowermost gears becomes a shaft-end gearwheel.

If one of two input shafts carries the drive gearwheels of odd-numbered gears, whereas the other input shaft carries the drive gearwheels of even-numbered gears, it is possible to switch from any gear to an adjacent one without interrupting the torque flow by transferring it from one of the two input shafts to the other.

It is further preferred that one of the two layshafts carries the driven gearwheels of gear sets associated to at least two, preferably more lowermost gears. Since the driven gearwheels associated to the lowermost gears tend to be larger than those associated to higher gears, the latter can all be placed on a second layshaft, and due to the small diameter of these gearwheels a portion of the gearbox casing surrounding this second layshaft can be made rather narrow.

According to a particularly compact embodiment, the gearwheel on said one layshaft which meshes with said other gearwheel of said transfer shaft is the driven gearwheel of the second gear.

Further features and advantages of the invention will become apparent from the subsequent description of embodiments thereof, referring to the appended figures.
- Fig. 1: is a schematic diagram of a gearbox according to a first embodiment of the invention.
- Fig. 2: is a diagram similar to that of Fig. 1 of a second embodiment of the invention; and
- Fig. 3: is a diagram of a third embodiment.

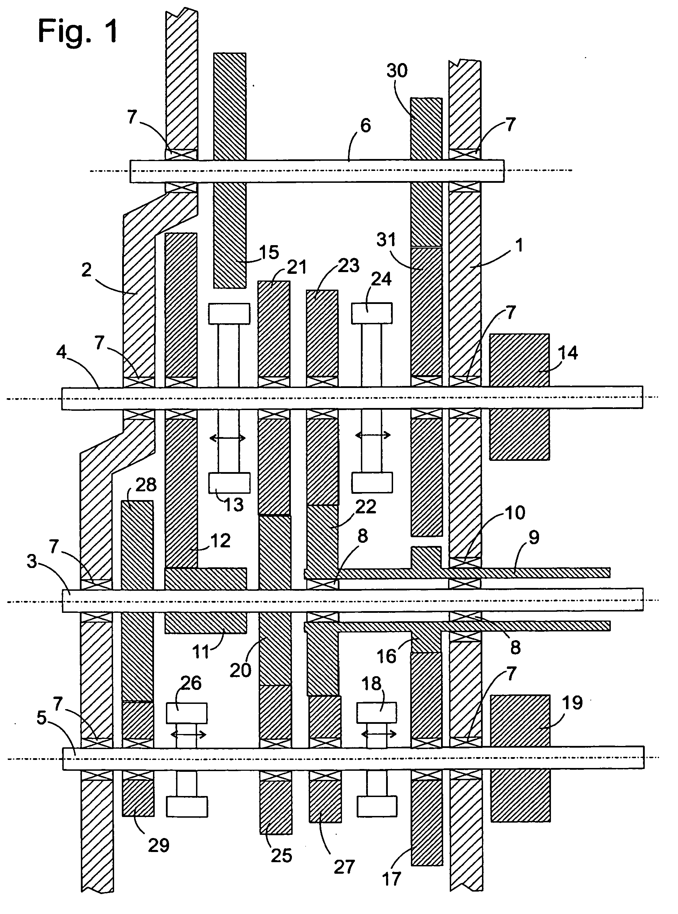

The gearbox shown in Fig. 1 has a casing, front and rear walls 1, 2 of which are shown in the drawing. A solid input shaft 3, layshafts 4, 5 and a transfer shaft 6 extend between front and rear walls 1, 2 and are rotatably mounted in bearings 7 of these. The solid drive shaft 3 is directly held in rear wall 2 by a ball bearing 7 capable of withholding an axial load. In the plane of front wall 1, a bearing 8 allowing for axial displacement is mounted around drive shaft 3 inside a hollow drive shaft 9. Hollow drive shaft 9 extends coaxially with respect to solid drive shaft 3 along part of the latter, and is supported by a ball bearing 10 mounted around hollow drive shaft 9 in an opening of front wall 1. A second bearing 8 is provided between the end of shaft 9 and shaft 3.

The two drive shafts 3, 9 are connected to an engine, not shown, by a double clutch, not shown, facing front wall 1. By means of the double clutch, torque from the engine is selectively applicable to the solid drive shaft 3, the hollow drive shaft 9, or both.

The gearbox of this embodiment has seven gear sets, each of which comprises a gearwheel which is mounted in a torque-proof manner on one of the input shafts 3, 9, and a gearwheel which is rotatably mounted on one of the layshafts 4, 5. Each gear set has a specific gear transmission ratio between its gearwheels. In the following we will speak of first to seventh gears and gear sets, the ordinal numbers being assigned to the gears in descending order of the gear transmission ratio.

The first gear set, i.e. the one having the highest gear transmission ratio, comprises a gearwheel 11 mounted in a torque-proof manner on solid input shaft 3, and a gearwheel 12 rotatably mounted on layshaft 4. A synchronizer 13 is provided on upper layshaft 4 in order to allow a torque-proof coupling of gearwheel 12 to upper layshaft 4 and, by means of a pinion 14 mounted on upper layshaft 4 outside the casing, to an output differential, not shown. Among all gearwheels of the gearbox, gearwheel 11 has the smallest diameter. It may be smaller than the diameter of hollow shaft 9. Fig. 1 suggests that gearwheel 11 may be broader than the other gearwheels so that it may mesh at the same time with gearwheel 12 and with a gearwheel 15 of transfer shaft 6, which are shown in Fig. 1 in an axially spaced relation to each other. It should be noted, however, that since the axes of the four shafts 3, 4, 5, 6 are not placed in a same plane but define a quadrangle in a cross section perpendicular to the axes, gearwheels 12 and 15 may overlap axially and mesh with different portions of the circumference of gearwheel 11, which, in such a case, need not be broader than any other gearwheel.

A second gear is established by gearwheels 16 of hollow shaft 9 and 17 of lower layshaft 5. A synchronizer 18 is provided for locking gearwheel 17 to lower layshaft 5, so that torque may be transmitted from the motor via hollow shaft 9, gearwheels 16, 17 and lower layshaft 5 to a second pinion 19 which is mounted on lower layshaft 5 outside the gearbox casing and meshes with the differential, just like pinion 14.

Since the driven gearwheels 12, 17 of the first and second gears are mounted on their respective layshafts 4, 5 directly adjacent to rear and front walls 2, 1, respectively, they can transmit a high torque without the layshafts 4, 5 being noticeably bent. In other words, although the gearbox may be rated for high torque, the layshafts 4, 5 may be rather thin and lightweight.

A gear set for the third gear is formed by a gearwheel 20 on solid input shaft 3 and a gearwheel 21 on upper layshaft 4. The synchronizer 13 is placed in a gap between gearwheels 12 and 21, so that it may lock either of these to upper layshaft 4.

The fourth gear has associated to it a gear set formed of a gearwheel 22, which is mounted at an inner end of hollow shaft 9, directly adjacent to gearwheel 20, and a gearwheel 23 mounted on upper layshaft 4 directly adjacent to gearwheel 21. Gearwheel 23 may be locked to upper layshaft 4 by a synchronizer 24 which is mounted on upper layshaft 4 at the same axial position as synchronizer 18 on lower layshaft 5.

A gear set for the fifth gear comprises gearwheel 20 and a gearwheel 25 on lower layshaft 5. Gearwheel 25 has a synchronizer 26 associated to it, which is mounted at the same axial position as gearwheel 11 or synchronizer 13.

The gear set for the sixth gear comprises gearwheel 22 and a gearwheel 27 on lower layshaft 5 which also has synchronizer 18 associated to it.

The seventh gear is established by a gear set comprising a gearwheel 28 mounted on solid input shaft 3 between gearwheel 11 and rear wall 2, and a gearwheel 29 on lower layshaft 5, which also co-operates with synchronizer 26.

The transfer shaft 6 carries a gearwheel 30 which meshes with a gearwheel 31 on upper layshaft 4. A reverse gear is established by locking gearwheel 31 to layshaft 4 using synchronizer 24. Torque is then transmitted to layshaft 4 from solid input shaft 3 via gearwheels 11, 15, 31, 31.

Based on the assembly shown in Fig. 1, it is very simple to design a simplified gearbox having only six forward gears by cancelling gearwheels 28, 29. Since both of these are located directly adjacent to a wall of the casing, the width of the casing and the length of shafts 3, 5 may be reduced if these two gearwheels are not provided, so that the simplified gearbox can be made more compact than the seven gear embodiment shown in Fig.1.

It is noted that the solid input shaft 3 carries all driven gears 11, 20, 28 of odd-numbered gears whereas the hollow shaft 9 carries gearwheels 16, 22 associated to even-numbered gears. Therefore, if an odd-numbered gear is set in the gearbox, an even-numbered gear can be pre-selected by locking its driven gear to its respective layshaft, and a smooth shift to the pre-selected gear without torque interruption can be carried out by transferring the motor torque from input shaft 3 to input shaft 9 using the double clutch. Similarly, interruption-free shifting can be carried out from even-numbered to odd-numbered gears by opening the clutch of hollow input shaft 9 while closing the clutch of solid input shaft 3.

It should further be noted that driven gearwheels 25, 27, 29 associated to the three highest gears are mounted on layshaft 5 with no other gearwheels in between. Since the driven gearwheels of high gears are small, a portion of the gearbox enclosing these gearwheels 25, 27, 29 can be made rather narrow, and the volume of the gearbox can be kept small.

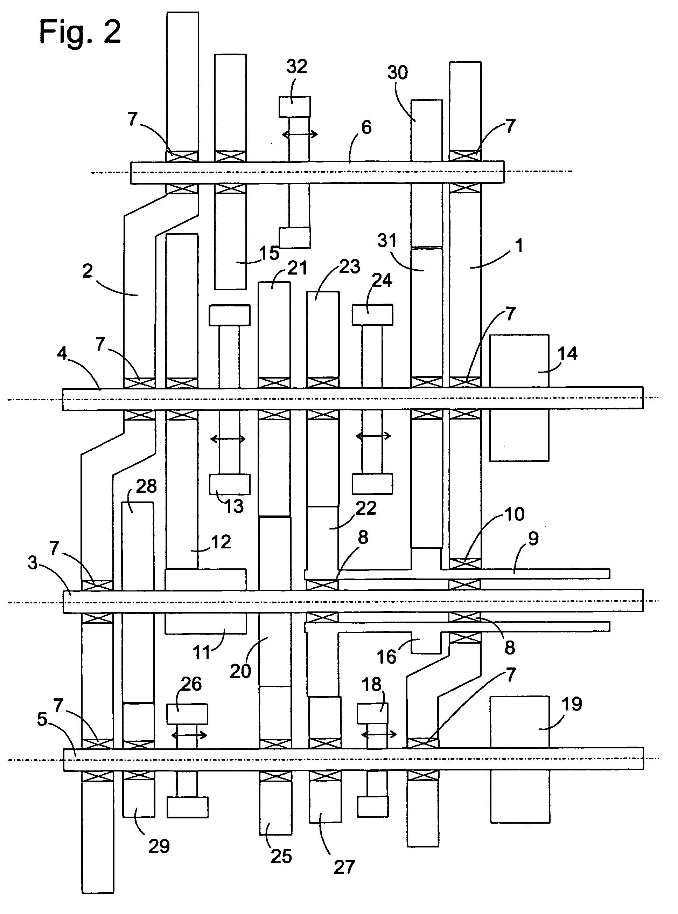

The embodiment of Fig. 2 is identical to that of fig. 1 in most respects, except for the fact that gearwheel 17 is missing and that instead a gear set for the second gear is formed by gearwheel 16 of hollow input shaft 9 and gearwheel 31 on upper layshaft 4, and that a synchronizer 32 is provided on transfer shaft 6. Thus, the transfer shaft 6 is not always coupled to solid input shaft 3, but only while synchronizer 32 locks gearwheel 15 to transfer shaft 6. Gearwheel 31 is thus used both for the reverse gear and for the second gear. Since gearwheel 17 was mounted directly adjacent to front wall 1 in the embodiment of Fig. 1, the space occupied by it can be saved in the embodiment of Fig. 2, and the volume of the gearbox casing can be reduced, as indicated by a recess in front wall 1 of Fig. 2, at the expense of having the transfer shaft 6 rotating whenever the second gear is active.

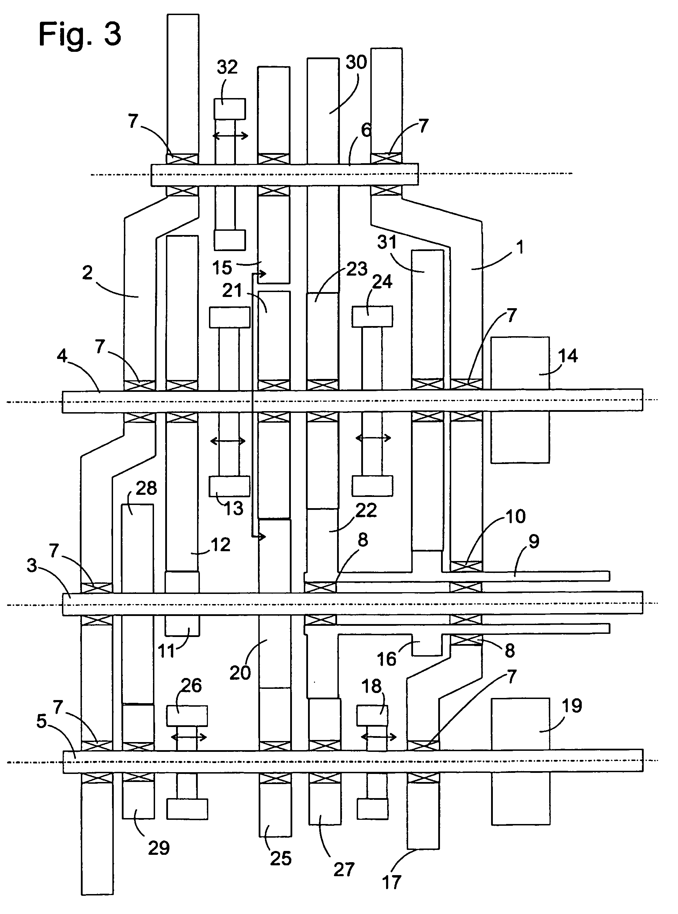

The embodiment of fig. 3 differs from that of Fig. 2 in that the gearwheels 15, 30 of transfer shaft 6 do not mesh with gearwheels 12 and 16 of first and second gears, respectively, but with gearwheels 20, 23 of third and fourth gears. Since in this way the gearwheels of the transfer shaft 6 are placed closer to each other, the transfer shaft 6 can be made shorter, and front and rear walls 1, 2 can be placed closer to each other in the vicinity of transfer shaft 6, whereby the volume of the gearbox casing can be further reduced.

### List of reference signs

front wall 1
rear wall 2
drive shaft 3
upper layshaft 4
lower layshaft 5
transfer shaft 6
bearing 7, 8
hollow drive shaft 9
bearing 10
gearwheel 11, 12
synchronizer 13
pinion 14
gearwheel 15, 16, 17
synchronizer 18
pinion 19
gearwheel 20, 21, 22, 23
synchronizer 24
gearwheel 25
synchronizer 26
gearwheel 27, 28, 29, 30, 31
synchronizer 32

## Claims

1. A gearbox for a motor vehicle comprising coaxially arranged solid and hollow input shafts (3, 9), each of which carries a plurality of drive gearwheels (11, 20, 28; 16, 22), each of which drive gearwheels (11, 20, 28; 16, 22) meshes with at least one associated driven gearwheel (12, 21, 25, 29; 23, 27, 17) on one of two layshafts (4, 5), each driven gearwheel (12, 21, 25, 29; 23, 27, 17) and its associated drive gearwheel (11, 20, 28; 16, 22) forming a gear set (11, 12; 16, 17; 20, 21; 22, 23; 20, 25; 22, 27; 28, 29) associated to a specific gear, the gear sets (11, 12; 16, 17) associated to the two lowermost gears comprising at least one shaft-end gearwheel (12, 16, 17) which has no other gearwheel between it and a bearing (7) of the shaft (3, 4, 5) carrying said shaft-end gearwheel (12, 16, 17), the driven gearwheels (25, 27, 29) of the gear sets (20, 25; 22, 27; 28, 29) associated to the three uppermost gears being located on a same layshaft (5) with no other gearwheel in between, and one (29) of driven gearwheels (25, 27, 29) of the gear sets (20, 25; 22, 27; 28, 29) associated to the three uppermost gears being a shaft-end gearwheel, a transfer shaft (6) carrying two gearwheels (15, 30), one (15) of which meshes with a gearwheel (11, 20) on one (3) of the input shafts and the other (30) of which meshes with a gearwheel (31) on one of the layshafts (4), **characterized in that** said one layshaft (4) carries a driven gearwheel (12) associated to the first gear.

2. The gearbox of claim 1, wherein in at least one of the two gear sets (11, 12; 16, 17) associated to the two lowermost gears the driven gearwheel (12, 17) is a shaft-end gearwheel.

3. The gearbox of claim 1 or 2, wherein in at least one (16, 17) of the two gear sets associated to the two lowermost gears both gearwheels (16, 17) are shaft-end gearwheels.

4. The gearbox of any of the preceding claims, wherein the driven gearwheel (29) of the gear set (28, 29) associated to the highest gear is said shaft-end gearwheel.

5. The gearbox of claim 4, wherein the drive gearwheel (28) of the gear set (28, 29) associated to the highest gear is located on one of said input shafts (3) between a bearing (7) of the latter and a drive gearwheel (11) associated to one of the two lowermost gears.

6. The gearbox of any of the preceding claims, wherein one (3) of the two input shafts (3, 9) carries the drive gearwheels (11, 20, 28) of odd-numbered gears, whereas the other input shaft (9) carries the drive gearwheels 16, 22) of even-numbered gears.

7. The gearbox of any of the preceding claims, wherein one of the two layshafts (4) carries the driven gearwheels (12, 31) of gear sets (11, 12; 16, 31) associated to at least two lowermost gears.

8. The gearbox of any of the preceding claims, wherein said gearwheel (31) on one of the layshafts (4) which meshes with said other gearwheel (30) of said transfer shaft (6) is the driven gearwheel (31) of the second gear.

## Patentansprüche

1. Getriebe für ein Kraftfahrzeug, umfassend koaxial angeordnete volle und hohle Antriebswellen (3, 9), von denen jede eine Vielzahl von Antriebszahnrädern (11, 20, 28; 16, 22) trägt, wobei jedes der Antriebszahnräder (11, 20, 28; 16, 22) mit mindestens einem zugeordneten angetriebenen Zahnrad (12, 21, 25, 29; 23, 27, 17) an einer von zwei Vorgelegewellen (4, 5) ineinandergreift, wobei jedes angetriebene Zahnrad (12, 21, 25, 29; 23, 27, 17) und das ihm zugeordnete Antriebszahnrad (11, 20, 28; 16, 22) einen Zahnradsatz (11, 12; 16, 17; 20, 21; 22, 23; 20, 25; 22, 27; 28, 29) bilden, der einer spezifischen Gangstufe zugeordnet ist, wobei die Zahnradsätze (11, 12; 16, 17), die den zwei niedrigsten Gangstufen zugeordnet sind, mindestens ein wellenendseitiges Zahnrad (12, 16, 17) umfassen, das kein anderes Zahnrad zwischen sich und einem Lager (7) der Welle (3, 4, 5) aufweist, die das wellenendseitige Zahnrad (12, 16, 17) trägt, wobei die angetriebenen Zahnräder (25, 27, 29) der Zahnradsätze (20, 25; 22, 27; 28, 29), die den drei höchsten Gangstufen zugeordnet sind, auf der gleichen Vorgelegewelle (5) angeordnet sind, ohne dass sich dazwischen ein anderes Zahnrad befindet, und wobei eines (29) der angetriebenen Zahnräder (25, 27, 29) der Zahnradsätze (20, 25; 22, 27; 28, 29), die den drei höchsten Gangstufen zugeordnet sind, ein wellenendseitiges Zahnrad ist, wobei eine Übertragungswelle (6) zwei Zahnräder (15, 30) trägt, von denen eines (15) mit einem Zahnrad (11, 20) auf einer (3) der Antriebswellen ineinandergreift und das andere (30) mit einem Zahnrad (31) auf einer der Vorgelegewellen (4) ineinandergreift, **dadurch gekennzeichnet, dass** die eine Vorgelegewelle (4) ein angetriebenes Zahnrad (12) trägt, das der ersten Gangstufe zugeordnet ist.

2. Getriebe nach Anspruch 1, wobei in mindestes einem der zwei Zahnradsätze (11, 12; 16, 17), die den zwei niedrigsten Gangstufen zugeordnet sind, das angetriebene Zahnrad (12, 17) ein wellenendseitiges Zahnrad ist.

3. Getriebe nach Anspruch 1 oder 2, wobei in mindestens einem (16, 17) der zwei Zahnradsätze, die den zwei niedrigsten Gangstufen zugeordnet sind, beide Zahnräder (16, 17) wellenendseitige Zahnräder sind.

4. Getriebe nach einem der vorhergehenden Ansprüche, wobei das angetriebene Zahnrad (29) des Zahnradsatzes (28, 29), der der höchsten Gangstufe zugeordnet ist, das wellenendseitige Zahnrad ist.

5. Getriebe nach Anspruch 4, wobei das Antriebszahnrad (28) des Zahnradsatzes (28, 29), der der höchsten Gangstufe zugeordnet ist, an einer der Antriebswellen (3) zwischen einem Lager (7) der Letztgenannten und einem Antriebszahnrad (11) angeordnet ist, das einer der zwei niedrigsten Gangstufen zugeordnet ist.

6. Getriebe nach einem der vorhergehenden Ansprüche, wobei eine (3) der zwei Antriebswellen (3, 9) die Antriebszahnräder (11, 20, 28) der ungeradzahligen Gangstufen trägt, während die andere Antriebswelle (9) die Antriebszahnräder (16, 22) der geradzahligen Gangstufen trägt.

7. Getriebe nach einem der vorhergehenden Ansprüche, wobei eine der zwei Vorgelegewellen (4) die angetriebenen Zahnräder (12, 31) der Zahnradsätze (11, 12; 16, 31) trägt, die mindestens den zwei niedrigsten Gangstufen zugeordnet sind.

8. Getriebe nach einem der vorhergehenden Ansprüche,, wobei das Zahnrad (31) an einer der Vorgelegewellen (4), das mit dem anderen Zahnrad (30) der Übertragungswelle (6) ineinandergreift, das angetriebene Zahnrad (31) der zweiten Gangstufe ist.

## Revendications

1. Une boîte de vitesse pour un véhicule à moteur comprenant des axes d'entrée creux et solides disposés de façon coaxiale (3, 9), dont chacun comporte une pluralité d'engrenages d'entraînement (11, 20, 28 ; 16, 22), dont chaque engrenage d'entraînement (11, 20, 28 ; 16, 22) s'engrène avec au moins un engrenage entraîné associé (12, 21, 25, 29 ; 23, 27, 17) sur l'un des deux arbres intermédiaires (4, 5), chaque engrenage entraîné (12, 21, 25, 29 ; 23, 27, 17) et son engrenage d'entraînement associé (11, 20, 28 ; 16, 22) formant un train d'engrenages (11, 12 ; 16, 17 ; 20, 21 ; 22, 23 ; 20, 25 ; 22, 27 ; 28, 29) associé à un engrenage spécifique, les trains d'engrenages (11, 12 ; 16, 17) associés aux deux engrenages les plus bas comprenant au moins un engrenage de bout d'arbre (12, 16, 17) qui n'a aucun autre engrenage entre lui et un palier (7) de l'arbre (3, 4, 5) portant ledit engrenage de bout d'arbre (12, 16, 17), les engrenages entraînés (25, 27, 29) des trains d'engrenages (20, 25 ; 22, 27 ; 28, 29) associés au trois engrenages les plus hauts étant situés sur un même arbre intermédiaire (5) sans aucun autre engrenage entre, et un (29) des engrenages entraînés (25, 27, 29) des trains d'engrenages (20, 25 ; 22, 27 ; 28, 29) associés au trois engrenages les plus hauts étant un engrenage de bout d'arbre, un arbre de transfert (6) comportant deux engrenages (15, 30), dont l'un (15) s'engrène avec un engrenage (11, 20) sur un (3) des arbres d'entrée et dont l'autre (30) s'engrène avec un engrenage (31) sur un des arbres intermédiaires (4), **caractérisé en ce que** cet arbre intermédiaire (4) comporte un engrenage entraîné (12) associé au premier engrenage.

2. La boîte de vitesse de la revendication 1, où dans au moins un des deux trains d'engrenages (11, 12 ; 16, 17) associés aux deux engrenages les plus bas l'engrenage entraîné (12, 17) est un engrenage de bout d'arbre.

3. La boîte de vitesse de la revendication 1 ou 2, où dans au moins un (16, 17) des deux trains d'engrenages associés aux deux engrenages les plus bas les deux engrenages (16, 17) sont des engrenages de bout d'arbre.

4. La boîte de vitesse de l'une des revendications précédentes, où l'engrenage entraîné (29) du train d'engrenages (28, 29) associé à l'engrenage le plus haut est ledit engrenage de bout d'arbre.

5. La boîte de vitesse de la revendication 4, où l'engrenage d'entraînement (28) du train d'engrenages (28, 29) associé à l'engrenage le plus haut se trouve sur un desdits arbres d'entrée (3) entre un palier (7) de ce dernier et un engrenage d'entraînement (11) associé à l'un des deux engrenages les plus bas.

6. La boîte de vitesse de l'une des revendications précédentes, où l'un (3) des deux arbres d'entrée (3, 9) comporte les engrenages d'entraînement (11, 20, 28) des engrenages impairs, tandis que l'autre arbre d'entrée (9) comporte les engrenages d'entraînement (16, 22) des engrenages pairs.

7. La boîte de l'une des revendications précédentes, où l'un des deux arbres intermédiaires (4) comporte les engrenages entraînés (12, 31) des trains d'engrenages (11, 12 ; 16, 31) associés au moins aux deux engrenages les plus bas.

8. La boîte de l'une des revendications précédentes, où ledit engrenage (31) sur l'un des arbres intermédiaires (4) qui s'engrène avec l'autre engrenage (30) de cet arbre de transfert (6) est l'engrenage entraîné (31) du deuxième engrenage.
